# FASCICULE DE BREVET EUROPEEN

(11) **EP 2 794 509 B1**
(45) Date de publication et mention de la délivrance du brevet: **23.11.2016**
(21) Numéro de dépôt: 12808403.5
(22) Date de dépôt: 21.12.2012
(51) Int. Cl.: C04B 111/00, C04B 26/26, C04B 28/02, C04B 28/10

(54) **ENROBÉS OUVERTS AUTO PLAÇANT, LEUR COMPOSITION, LEUR FABRICATION ET LEUR MISE EN OEUVRE**
SELBSTPLATZIERENDE PORÖSE ASPHALTE, ZUSAMMENSETZUNG DAMIT SOWIE HERSTELLUNG UND ANWENDUNG DAVON
SELF-PLACING POROUS ASPHALTS, AND COMPOSITION, PRODUCTION AND IMPLEMENTATION OF SAME

(30) Priorité: 21.12.2011 FR 1162211
(43) Date de publication de la demande: 29.10.2014
(73) Titulaire: Eurovia, 92500 Rueil-Malmaison (FR)
(72) Inventeur: FAUCON-DUMONT, Stéphane, F-33127 Martignas Sur Jalles (FR); MAZE, Michel, F-33000 Bordeaux (FR); DELFOSSE, Frédéric, F-33600 Pessac (FR)
(74) Mandataire: Regimbeau
(86) Numéro de dépôt international: PCT/EP2012/076740
(87) Numéro de publication internationale: WO 2013/093046

(56) Documents cités:
- EP-A1- 0 344 141
- EP-A1- 1 930 304
- EP-A1- 2 230 355
- US-A- 3 717 492
- US-A- 3 941 607

## Description

La présente invention a pour objet des enrobés ouverts auto plaçant, leur composition, leur fabrication et leur mise en oeuvre.

Le brevet US 3 941 607 décrit une méthode pour la production d'une couche de roulement pour des aires de trafic ou des équivalents, plus particulièrement pour les routes et les surfaces d'atterrissage des aéroports, dans lesquelles des chips d'un diamètre moyen allant de 2 à 25 mm sont mélangées à un liant bitumineux comprenant des fibres et/ou des polymères compactés puis un mortier est ajoutés pour remplir les vides.

Le brevet EP 1 930 304 décrit des enrobés à froid pour des couches de roulement et en particulier décrit un liant de base ayant une viscosité inférieure à 1500mPa.s à 20°C, et constitué d'un mélange d'acide gras, d'au moins un adjuvant réactif et d'au moins un activateur pour amorcer la réaction.

Le brevet US 3 717 492 décrit une composition bitumineuse perméable à l'eau pour des applications dans l'ingénierie hydraulique, contenant du bitume et des composés minéraux et comprenant un mélange de mortier bitumineux et une fraction de pierre.

L'usage des enrobés ouverts est déjà connu dans la profession. Ces applications sont diverses. Les enrobés selon l'invention se rapprochent des enrobés objets de la demande EP 0 344 141 qui décrit une composition bitumineuse perméable à structure ouverte à base de gravillon calibré enrobé d'un mastic d'asphalte constitué à base de sable roulé, de filler, de bitumes et de fibres cellulosiques. Le produit final est obtenu par un procédé de fabrication discontinu dans lequel un mastic est préalablement réalisé.

Dans cette demande EP 0 344 141, une structure ouverte désigne une composition bitumineuse qui reste perméable après refroidissement et durcissement du bitume, les espaces intergranulaires continuant à assurer un passage entre les gravillons enrobés du mastic d'asphalte, tant pour l'eau que pour l'air.

La demanderesse a constaté que les enrobés mis au point suivant EP 0 344 141 présentaient plusieurs inconvénients.

Tout d'abord, il est nécessaire de fabriquer un mastic (mélange bitume et fractions minérales autres que les gravillons) qui sera ensuite mélangé aux gravillons. La fabrication en mode discontinu ne permet pas suivant cet art antérieur de produire à haute cadence et avec une homogénéité satisfaisante.

Enfin, les enrobés ouverts selon EP 0 344 141 présentent des caractéristiques mécaniques insuffisantes en termes de résistance, de sensibilité à l'eau et de fluage statique. Ces paramètres importants et bien connus de l'homme de l'art sont améliorés suivant l'invention.

L'invention permet de remédier aux inconvénients sus-mentionnés. Tout d'abord, il a été constaté, de manière surprenante, qu'un procédé en une seule étape était possible ; le procédé en une seule étape permet non seulement d'accroître les cadences mais aussi d'améliorer l'homogénéité des enrobés. De plus, selon l'invention, la durabilité des enrobés ouverts auto plaçant est accrue par l'emploi de bitume modifié par des polymères, de dopes d'adhésivité, de fibres minérales et/ou synthétiques, et éventuellement de chaux et/ou de ciment. Enfin, les caractéristiques mécaniques faibles en termes de résistance, de sensibilité à l'eau et de fluage statique sont améliorés suivant l'invention, par l'ajout de bitume polymère, de dopes d'adhésivité, de fibres, et éventuellement de chaux et/ou ciment. Le comportement au fluage statique est beaucoup plus performant par l'emploi selon l'invention d'un sable concassé ou semi-concassé dans le mastic bitumineux en lieu et place du sable naturel.

Ainsi, l'invention a pour premier objet des enrobés ouverts auto plaçant constitués de fractions solides minérales enrobées à l'aide d'un liant bitumineux comprenant des fibres minérales ou des fibres de synthèse, caractérisés en ce que le liant bitumineux est modifié par adjonction de polymères et de dopes d'adhésivité, en ce que le sable dans les fractions solides minérales est essentiellement du sable concassé et/ou semi-concassé, et en ce que les enrobés sont obtenus par un procédé de fabrication qui consiste à mélanger tous les éléments dans un même malaxeur en une seule étape, et en ce que les fractions solides minérales comprennent des granulats minéraux naturels présentant la répartition suivante :
- des éléments inférieurs à 0,063 mm ;
- du sable concassé ou semi-concassé dont les éléments sont compris entre 0,063 mm et 2 ou entre 0,063 mm et 4 mm ;
- des gravillons, dont les éléments ont des dimensions D supérieures à 14 mm, pouvant de préférence aller jusqu'à 50 mm ;
et éventuellement des agrégats d'enrobés.

Le procédé de fabrication peut être réalisé en une seule étape dans tout type de poste d'enrobage.

Ainsi, selon l'invention, il n'est plus nécessaire de fabriquer un mastic préalable mais le bitume pourra être ajouté à l'ensemble des fractions solides minérales qui inclue les gravillons.

Par « enrobés ouverts », on entend ici des enrobés qui restent perméables après leur refroidissement de par la présence d'espaces (porosité) qui continuent à assurer un passage entre les fractions solides minérales enrobées par le liant bitumineux, tant pour l'eau que pour l'air. Cette porosité des enrobés ouverts est définie par une teneur en vides, après mise en oeuvre et refroidissement, comprise entre 25% et 40% de vides.

Cette teneur en vides est déterminée géométriquement et/ou par gammadensimétrie. Elle est basée sur le rapport entre la masse volumique apparente en place de l'enrobé auto plaçant nommée MVa et sa masse volumique maximale dénommée MVRe. La MVRe est calculée par le mélange des masses volumiques des constituants ou mesurée selon la norme NF EN 12697-5.

Par « enrobés auto plaçant », on entend ici des enrobés foisonnés qui ne nécessitent pas de compactage, la mise en oeuvre s'effectuant par le seul effet gravitaire et une finition légère permettant d'ajuster la planéité de l'ouvrage.

Les fractions solides minérales comprennent des éléments inférieurs à 0,063 mm, du sable et des gravillons.

Par "fractions solides minérales", on entend ici toutes fractions solides utilisables pour la réalisation d'enrobés bitumineux, comprenant notamment les granulats minéraux naturels (gravillons, sable, fines), roulés, semi-concassés ou concassés, d'origine alluvionnaire ou à partir de roches massives (carrière ou gravière), les produits de recyclage tel que les agrégats d'enrobés résultant du recyclage des matériaux récupérés lors de la réfection des routes ainsi que des surplus de centrales d'enrobage, les rebuts de fabrication, les granulats provenant du recyclage de matériaux routiers y compris les bétons, les laitiers en particulier les scories, les schistes en particulier la bauxite ou le corindon, les poudrettes de caoutchouc provenant du recyclage des pneus notamment, les granulats artificiels de toute origine et provenant par exemple de mâchefers d'incinération des ordures ménagères (MIOM), ainsi que leurs mélanges en toutes proportions.

Les fractions solides minérales comprennent des granulats minéraux naturels suivant la répartition ci-après :
- des éléments inférieurs à 0,063 mm (filler et/ou fines et/ou filler d'apport)
- du sable concassé ou semi-concassé dont les éléments sont compris entre 0,063 mm et 2 ou entre 0,063 mm et 4mm ;
- des gravillons, dont les éléments ont des dimensions D supérieures à 14 mm, avantageusement supérieures à 26 mm et pouvant de préférence aller jusqu'à 50 mm ;

La taille des granulats minéraux est mesurée par les essais décrits dans la norme NF EN 933-2 (version mai 1996).

Le terme « fines » désigne la fraction granulaire passant au tamis de 0,063 mm.

Le terme « filler » désigne un granulat dont la plupart des grains passent au tamis de 0,063 mm et qui peut être ajouté aux matériaux de construction pour leur conférer certaines caractéristiques.

Le terme « filler d'apport » désigne un filler d'origine minérale qui a été produit séparément en usine suivant un processus contrôlé, par opposition au filler présent à l'état de fraction fine dans toute autre classe granulaire.

On entend par « essentiellement » au moins 90% en poids de sable concassé ou semi-concassé, par rapport au poids total du sable, avantageusement au moins 95% en poids, plus avantageusement 100% en poids.

On entend par sable concassé un sable issu d'un bloc rocheux par une fragmentation mécanique. Ces sables contiennent essentiellement des faces cassées en opposition aux sables naturels qui contiennent majoritairement des éléments dits « roulés ».

On entend par sable semi concassé un sable intermédiaire entre le concassé et le naturel. Il est obtenu par mélange de ces deux derniers ou par fragmentation mécanique d'une fraction de roche naturelle.

Il a été constaté que l'emploi d'essentiellement un sable concassé ou semi-concassé dans le mastic bitumineux en lieu et place du sable naturel permet d'améliorer le comportement au fluage statique des enrobés.

Les fractions solides minérales comprennent avantageusement également des agrégats d'enrobés.

On entend par « agrégats d'enrobés » des enrobés (mélange de granulats et de liants bitumineux) provenant de fraisage de couches d'enrobé, de concassage de plaques extraites de chaussées en enrobées, de morceaux de plaques d'enrobés, de déchets d'enrobé ou de surplus de productions d'enrobés (les surplus de productions sont des matériaux enrobés ou partiellement enrobés en centrale résultant des phases transitoires de fabrication). Ces éléments et les autres produits de recyclage peuvent atteindre des dimensions jusqu'à 50 mm. Ils peuvent être calibrés au besoin en fonction de l'utilisation.

On entend par « liant bitumineux » tout liant hydrocarboné, qui peut être d'origine fossile, d'origine synthétique ou d'origine végétale, utilisable pour la réalisation d'enrobé. Le liant bitumineux peut avantageusement être utilisé pur ou fluidifié et/ou fluxé et /ou modifié. On peut également utiliser un liant sous forme de mousse, avec avantageusement 2 à 4% en poids d'eau, par rapport au poids du liant, avec ou sans additif.

On utilise dans la présente invention un liant bitumineux modifié par adjonction de polymère(s). Parmi les polymères utilisables pour modifier les liants bitumineux, on peut citer les copolymères styrène-butadiène, les copolymères styrène-isoprène, les copolymères d'éthylène, les terpolymères, tel que par exemple le composé d'une chaîne éthylénique avec des groupements fonctionnels d'acrylate de butyle et de glycidyl acrylate de méthyle qui assurent une bonne stabilité au mélange liant bitumineux/polymère, les élastomères et les plastomères permettant une amélioration importante des performances mécaniques. Ces bitumes polymères peuvent être fabriqués selon différents procédés, avantageusement par un mélange physique ou par réticulation. Les bitumes modifiés par des polymères sont définis par la norme NF EN 14023 et le document « guide technique : emploi des liants modifiés, des bitumes spéciaux et des bitumes avec additifs en techniques routières » publié par le Laboratoire Central des Ponts et Chaussées LCPC (ISSN 1151-1516 ISBN 2-7208-7140-4).

Parmi les polymères utilisables pour modifier les liants bitumineux, on peut également citer les résines époxydiques. Ces résines sont avantageusement obtenues par réaction de polyépoxydes avec des polyamines. On peut également utiliser les résines époxy décrites dans la publication Herrington (référence ISBN : 9780478364552).

Il a été constaté par les inventeurs que l'utilisation d'un liant bitumineux modifié par adjonction de polymère permet d'améliorer la cohésion des enrobés ouverts. Lorsqu'on utilise un tel liant bitumineux, on constate également une réduction du fluage, et ainsi lorsque les enrobés ouverts sont appliqués sur une pente sévère 4/4, le phénomène d'affaissement est réduit. Enfin, l'adjonction du polymère permet d'améliorer la résistance au gel et la sensibilité à l'eau des enrobés ouverts.

La teneur en polymère dans le liant bitumineux varie avantageusement de 1 à 20% en poids, plus avantageusement de 1 à 5% en poids, par rapport au poids total du liant bitumineux.

Selon l'invention, on ajoute également au liant bitumineux un dope d'adhésivité. On entend par « dope d'adhésivité » un additif tensioactif permettant d'améliorer l'adhésivité du liant bitumineux sur les fractions solides minérales en présence d'eau ou à sec. Les dopes d'adhésivité favorisent le mouillage des surfaces minérales par le liant et s'opposent à la rupture par l'eau de la liaison minéral/liant. Les dopes d'adhésivité sont définis dans la norme NF P98-150.

A titre d'exemple de dope d'adhésivité, on peut citer les composés tensioactifs azotés dérivés des acides gras (amines, polyamines...), en particulier les émulsifiants dérivés des polyamines.

Dans le cadre de la présente invention, le dope d'adhésivité est incorporé dans la masse du liant. La teneur en dope d'adhésivité est avantageusement comprise entre 0,2 et 0,5% en poids, plus avantageusement entre 0,3 et 0,4% en poids, par rapport au poids total du liant bitumineux.

Dans une variante de l'invention, les additifs chaux et/ou ciment sont ajoutés à la composition minérale en supplément ou en remplacement de tout ou partie du filler d'apport. Ces additifs ont deux objectifs principaux, l'amélioration des performances mécaniques de l'enrobé ouvert auto plaçant et de la sensibilité à l'eau.

Les teneurs en chaux et/ou ciment sont comprises entre 0,5 et 5% en poids, avantageusement entre 0,5 et 3% en poids par rapport au poids de l'enrobé.

Le liant bitumineux a de préférence une pénétrabilité, mesurée selon la norme NF EN 1426, qui varie entre 10 à 150 dixièmes de millimètres (1/10 mm). La pénétrabilité du liant bitumineux, exprimée en 1/10 mm, est avantageusement comprise entre 30 et 70, plus avantageusement entre 30 et 50 1/10 mm.

La teneur totale en liant bitumineux est avantageusement de 2 à 10% en poids, avantageusement 3 à 6% en poids, par rapport au poids total des fractions solides minérales.

Cette teneur en liant bitumineux correspond à la quantité de liant bitumineux introduit en tant que tel (bitume d'apport) plus la quantité de liant bitumineux récupéré des agrégats d'enrobés faisant partie de la fraction minérale solide. Selon une variante avantageuse de l'invention, la teneur en bitume d'apport est comprise entre 2 et 4% en poids, par rapport au poids des fractions solides minérales.

Par « fibres minérales ou fibres de synthèse », on entend ici des fibres inertes qui peuvent être utilisées en tant qu'additif. A titre d'exemples de fibres minérales on peut citer la laine de roche. A titre d'exemples de fibres de synthèse, on peut citer les fibres polymères, en particulier les fibres de polyester.

L'utilisation de telles fibres permet d'augmenter la durabilité des enrobés ouverts auto plaçant. L'utilisation de telles fibres permet également d'augmenter la résistance mécanique des enrobés ouverts auto plaçant.

La taille des fibres est avantageusement supérieure à 1/20 de D, plus avantageusement leur taille varie de 1/10 de D à D (D est la taille des gravillons qui est supérieure à 14 mm, avantageusement comprise entre 14 et 50 mm, plus avantageusement comprise entre 26 et 50 mm)

La teneur en fibres dans les enrobés ouverts auto plaçant varie avantageusement de 0,1 à 1% en poids, plus avantageusement de 0,2 à 0,6% en poids, par rapport au poids total des enrobés ouverts auto plaçant.

Dans une variante préférée de l'invention, les enrobés contiennent également un additif de maniabilité qui permet d'augmenter la durée de maniabilité de l'enrobé lors de son application. L'additif de maniabilité permet avantageusement également d'améliorer le caractère auto plaçant. Cet additif de maniabilité permet avantageusement l'application de l'enrobé à grande cadence sous toute condition météorologique et pour toute inclinaison de la surface à revêtir, jusqu'à 4/4 de pente.

Les enrobés ouverts selon l'invention comprennent avantageusement un additif de maniabilité choisi parmi un additif à point de fusion, un additif à réactivité réglable et leurs mélanges.

Dans une première variante avantageuse de l'invention, l'additif de maniabilité est un composé qui apporte de la maniabilité par changement d'état à la température de fabrication et de mise en oeuvre. Cet additif est ici dénommé « additif de maniabilité par fusion ».

L'additif de maniabilité par fusion présente avantageusement un point de fusion ou une zone de ramollissement dans une gamme de températures allant de 40°C à 150°C, plus avantageusement de 80°C à 120°C.

L'additif de maniabilité par fusion est avantageusement ajouté au liant bitumineux ou directement lors de la fabrication de l'enrobé ouvert autoplaçant, plus avantageusement au liant bitumineux préalablement à la fabrication des enrobés. La teneur en additif de maniabilité par fusion sera avantageusement comprise entre 0,1 et 2% en poids par rapport au poids de l'enrobé ouvert autoplaçant, plus avantageusement entre 0,1 et 0,8% en poids, par rapport au poids total de l'enrobé ouvert autoplaçant.

L'additif de maniabilité par fusion est avantageusement choisi dans le groupe constitué par un triglycéride d'acides gras, plus avantageusement l'acide 12-hydroxy-octadécanoïque et/ou une huile de ricin hydrogénée, une cire d'origine animale, végétale ou d'hydrocarbure, en particulier des cires hydrocarbonées à chaîne longue (plus de 30 atomes de carbone), et leurs mélanges.

Selon une première variante, l'additif de maniabilité par fusion est au moins un triglycéride d'acides gras, ledit acide gras étant choisi dans le groupe constitué par les acides gras saturés, comprenant de 12 à 30 atomes de carbone, avantageusement de 12 à 20 atomes de carbone, et pouvant être substitués par au moins une fonction hydroxyle ou par un radical alkyle en C₁-C₄. Un acide gras saturé ne comporte pas d'insaturations (double ou triple liaison carbone carbone).

On entend par les termes « triglycéride d'acide gras » un dérivé glycérol dont les trois fonctions hydroxyles sont substituées par un acide gras tel que défini précédemment. On peut inclure dans cette définition des quantités faibles (moins de 5% en poids par rapport à la quantité massique de triglycérides engagée) de diglycérides, de monoglycérides et même d'acide gras libres.

Dans le cadre de la présente invention, on entend par les termes « substitué par au moins une fonction hydroxyle ou par un radical alkyle en C₁-C₄ » un acide gras dont au moins un atome de carbone est substitué par une fonction hydroxyle (avantageusement par une seule fonction hydroxyle) et/ou par un radical alkyle contenant de 1 à 4 atomes de carbone (on peut citer les radicaux méthyle, éthyle, propyle, butyle, t-butyle, isopropyle). L'acide gras, s'il est substitué, est avantageusement uniquement hydroxylé, en particulier par une seule fonction hydroxyle.

Le triglycéride comprend de 39 à 93 atomes de carbone, avantageusement 39 à 63 atomes de carbone, plus avantageusement 51 à 63 atomes de carbone. On peut envisager des triglycérides mixtes (les molécules d'acides gras constituant le triester sont distinctes) ou homogènes (les molécules d'acides gras constituant le triester sont identiques), avec une préférence pour les triglycérides homogènes. Selon une variante préférée de l'invention, les molécules d'acides gras comprennent de 12 à 30 atomes de carbone, avantageusement 12 à 20 atomes de carbone, plus avantageusement 16 à 20 atomes de carbone.

On pourrait envisager l'emploi de diglycérides comprenant ce même nombre d'atomes de carbone (39 à 93) dans lesquels les molécules d'acides gras auraient des chaînes plus longues. Toutefois, de tels diglycérides ne peuvent être obtenus que par synthèse. On préfère les triglycérides d'origine naturelle.

A titre de molécules d'acides gras saturés préférées, on peut notamment citer : l'acide 12-hydroxy-octadécanoïque (C18, aussi connu sous le nom d'acide 12-hydroxystéarique), l'acide hexadécanoïque (C16, aussi connu sous le nom d'acide palmitique), l'acide octadécanoïque (C18, aussi connu sous le nom d'acide stéarique), l'acide 9,10-dihydroxy- octadécanoïque (C18, aussi connu sous le nom d'acide dihydroxystéarique), l'acide icosanoïque (C20, aussi connu sous le nom d'acide arachidique), l'acide nonadécanoïque (C19).

L'additif comprend de préférence au moins un triglycéride dont une molécule d'acide gras est constituée de l'acide 12-hydroxy-octadécanoïque.

La source de triglycérides est avantageusement une huile végétale hydrogénée.

Par huile végétale, on entend les huiles, brutes ou raffinées, obtenues par trituration de graines, noyaux ou fruits de végétaux, en particulier les plantes oléagineuses, telles que, de manière non limitatives, les huiles de lin, de colza, de tournesol, de soja, d'olive, de palme, de ricin, de bois, de maïs, de courge, de pépins de raisin, de jojoba, de sésame, de noix, de noisette, d'amande, de karité, de macadamia, de coton, de luzerne, de seigle, de carthame, d'arachide, de coprah et d'argan.

L'huile végétale est hydrogénée, c'est-à-dire qu'elle a subi un procédé d'hydrogénation par lequel les éventuelles insaturations (doubles liaisons) des acides gras naturels sont hydrogénées, dans le but d'obtenir des acides gras essentiellement saturés.

L'huile végétale hydrogénée présente avantageusement un indice d'iode selon la norme ISO 3961 inférieur à 50 g d'I₂/100g, avantageusement inférieur à 10 g d'I₂/100g, plus avantageusement inférieur à 5 g d'I₂/100g, encore plus avantageusement inférieur à 3,5 g d'I₂/100g. L'indice d'iode d'un lipide est la masse de diiode (I₂) (exprimée en g) capable de se fixer sur les insaturations (double liaison le plus souvent) des acides gras de 100 g de matière grasse.

L'huile végétale hydrogénée présente avantageusement un indice d'acide selon la norme NF T 60-204 inférieur à 10 mg KOH/g, plus avantageusement un indice d'acide inférieur à 5 mg KOH/g, encore plus avantageusement un indice d'acide inférieur à 2 mg KOH/g. L'indice d'acide est la masse d'hydroxyde de potassium (exprimé en mg) nécessaire pour neutraliser les acides gras libres contenus dans un gramme de matière grasse.

L'huile végétale hydrogénée présente avantageusement un indice de saponification compris entre 150 et 200 mg KOH/g, plus avantageusement un indice de saponification compris entre 170 et 190 mg KOH/g. L'indice de saponification correspond à la masse d'hydroxyde de potassium en mg nécessaire pour neutraliser les acides gras libres et pour saponifier les acides gras combinés dans un gramme de corps gras.

L'huile végétale hydrogénée peut comporter des fonctionnalités hydroxyles, elle présente alors avantageusement un indice d'hydroxyle compris entre 140 et 180 mg KOH/g, plus avantageusement un indice d'hydroxyle compris entre 150 et 170 mg KOH/g. L'indice d'hydroxyle est le nombre de milligrammes d'hydroxyde de potassium qui serait nécessaire pour neutraliser l'acide acétique qui se combine par acétylation à un gramme de produit. Pratiquement, on utilise l'anhydride acétique et on tient compte dans le calcul de l'indice d'hydroxyle de la valeur de l'indice d'acide.

La teneur en insaponifiables dans l'huile est avantageusement inférieure à 10%, plus avantageusement inférieure à 5%, encore plus avantageusement inférieure à 1%.

L'huile végétale hydrogénée est de préférence une huile de ricin hydrogénée.

Selon une deuxième variante, l'additif de maniabilité par fusion est une cire d'origine animale, végétale ou d'hydrocarbure, en particulier des cires hydrocarbonées à chaîne longue (plus de 30 atomes de carbone).

La cire hydrocarbonée peut être de poids moléculaire faible à élever. Un poids moléculaire élevé est par exemple un poids moléculaire compris entre 10 000 et 20 000 g/mol, notamment un poids moléculaire compris entre 12 000 et 15 000 g/mol. Un poids moléculaire faible est un poids moléculaire supérieur à 400 g/mol et inférieur à 6 000 g/mol, dans le cas de cire hydrocarbonée à base de polyéthylène ou également de cire hydrocarbonée obtenue par la synthèse de Fischer Tropsch (telle que la cire Fischer Tropsch commercialisée sous le nom commercial Sasobit® par la société Sasol).

La cire peut être des paraffines microcristallines. Dans ce cas, il est particulièrement avantageux que le liant bitumineux soit additivé par un dope d'adhésivité pour compenser la perte d'adhésivité liée à l'utilisation des paraffines

L'additif de de maniabilité par fusion peut bien entendu également être un mélange des composés décrits ci-dessus.

Dans une deuxième variante avantageuse de l'invention, l'additif de maniabilité est un composé qui apporte de la maniabilité qui sera ensuite bloquée par ajout d'un additif adapté. Cet additif est ci-après dénommé « additif de maniabilité à réactivité réglable ».

L'additif de maniabilité à réactivité réglable est avantageusement ajouté dans le liant, lors de la fabrication des enrobés ou plus avantageusement lors de la mise en oeuvre des enrobés. La teneur en additif de maniabilité à réactivité réglable sera avantageusement comprise entre 1 et 10 kg par tonne d'enrobés, plus avantageusement entre 2 et 4 kg par tonne d'enrobés

A titre d'exemple d' additif de maniabilité à réactivité réglable, on peut citer les huiles lourdes d'origine minérales, les huiles et graisses animales et végétales, et leurs dérivés fonctionnalisés avec des produits de transestérification et des produits de saponification et leurs mélanges, les mono-, di- ou triacides carboxyliques organiques, saturés ou insaturés, ayant de 6 à 24 atomes de carbone pouvant être ramifiés (tels que décrits dans la demande AT 406 375. On peut également utiliser un mélange d'acides gras saturé(s) ou insaturé(s), monocarboxyliques comprenant de 6 à 24 atomes de carbone, dicarboxyliques comprenant de 12 à 48 atomes de carbone et/ou tricarboxyliques comprenant de 18 à 72 atomes de carbone (tels que décrits dans la demande FR 2 909 665 A). Le dimère préféré est l'acide gras insaturé comprenant 18 atomes de carbone dont la référence CAS est 61788-89-4. Le trimère préféré est l'acide gras insaturé comprenant 18 atomes de carbone dont la référence CAS est 68937-90-6. On utilise de préférence un mélange d'acides gras dans lequel la proportion massique d'acides gras monocarboxyliques/acides gras dimères ou trimères est comprise entre 1/1,0 et 2/1.

Lorsqu'on utilise une telle huile lourde ou un tel mélange d'acide gras, des réactifs adaptés sont ajoutés. Ces réactifs sont décrits en page 3, lignes 23 à 34 de la publication FR 2 909 665 A.

Parmi ces réactifs, on peut plus particulièrement citer : du ciment, de la chaux, du chlorure de calcium.

Ces réactifs permettent en présence d'un activateur de limiter dans le temps l'effet fluxant ou fluidifiant de l'additif de maniabilité à réactivité réglable : apport de fluidité diminué au cours du temps par blocage de l'additif. L'activateur est de préférence choisi parmi l'eau, un glycol, un alcool gras, un tensio actif, un acide organique ou inorganique, une base, un sel métallique, du soufre et ses composés, un peroxyde, un latex, une dispersion de résine synthétique et leurs mélanges ; plus préférentiellement l'eau. Par exemple, lorsque l'additif comprend un triacide carboxylique organique ayant de 6 à 24 atomes de carbone (trimère ; en mélange avec des monomères et des dimères), l'ajout de ciment ou de chaux entraîne en présence d'eau la formation de chélates : au bout d'un certain temps, le triacide ne peut plus remplir sa fonction de fluidification.Un autre additif de maniabilité à réactivité réglable est un additif qui s'autoxypolymérise sous l'action de l'air ; notamment en raison de la présence d'un groupe fonctionnel oxydable (choisi parmi les groupes acide carboxylique, diacide carboxylique, époxyde, peroxyde, aldéhyde, éther, ester, alcool et cétone) ou d'une insaturation autre qu'un cycle (double liaison, triple liaison). La présence d'atomes d'oxygène sur les molécules de l'additif de maniabilité à réactivité réglable permet la formation de ponts oxygène entre les molécules de l'additif et/ou entre les molécules de l'additif et d'autres composés du mélange comme le liant. La présence d'insaturations permet la formation de ponts d'oxygène à partir de l'oxygène de l'air par réaction radicalaire.

L'additif est avantageusement un monoester d'acide gras, plus avantageusement un monoester méthylique d'acide gras, propre à se transformer chimiquement au contact de l'air, après répandage du liant, pour augmenter la viscosité de celui-ci. Le terme monoester désigne des esters dont la molécule contient un seul groupe -CO-O-, par opposition notamment aux triglycérides constitutifs des corps gras, qui sont des triesters d'acides gras. Les monoesters d'acide gras possèdent un point éclair de l'ordre de 200°C. Ils peuvent être obtenus par transestérification à partir d'huiles végétales.

Les huiles végétales sont issues de la trituration de différentes sortes de graines, en particulier les graines de colza, de tournesol, de lin. Chimiquement elles se présentent sous la forme de triglycérides. Les acides gras peuvent comporter des doubles liaisons carbone-carbone en nombre variable selon la plante dont provient l'huile. Les acides gras et les esters correspondants possèdent un pouvoir réducteur qui est fonction du nombre de doubles liaisons et de la proximité de celles-ci dans la chaîne hydrocarbonée. Ce pouvoir réducteur est mesuré par l'indice d'iode, qui est avantageusement supérieur ou égale à 120, et se manifeste par une polymérisation sous l'action de l'oxygène, qui entraîne un épaississement et un durcissement. Ce phénomène est connu sous le nom de siccativation. La polymérisation peut être catalysée par des sels métalliques, notamment des sels organiques de cobalt, de calcium, de manganèse, de zinc et de zirconium.

L'augmentation de consistance du liant après répandage fait appel à des réactions chimiques en présence de l'oxygène de l'air. Ces réactions, catalysées par des sels métalliques, comprennent la formation de ponts peroxyde -O-O- sur les chaînes insaturée des acides gras. Ces ponts sont instables et conduisent à la formation de radicaux libres, qui attaquent d'autres chaînes, réalisant par propagation une polymérisation-réticulation des esters

Des réactifs en fonction de la nature de l'additif de maniabilité à réactivité réglable sont ajoutés dans le liant pour permettre de favoriser la montée en cohésion de l'enrobé. Parmi ces réactifs, on peut citer des siccativants pour permettre une cinétique d'oxydation de l'additif : des sels métalliques, en particulier un octoate ou naphténate de cobalt, de calcium, de manganèse, de zinc ou de zirconium, et leurs mélanges, en particulier un mélange d'au moins deux sels de métaux différents.

Par le choix du couple additif/réactif, sur la base des connaissances générales de l'homme du métier, la fluidité du liant bitumineux est adaptée en fonction des besoins. La quantité en réactif, par rapport à la teneur en additif de maniabilité à réactivité réglable, est déterminée par l'homme du métier sur la base de ses connaissances générales.

Ces différents additifs peuvent être utilisés seuls ou en mélange. Ils permettent d'améliorer la maniabilité du liant bitumineux, pour une durée avantageusement contrôlée, tout en préservant les propriétés mécaniques des enrobés. Plus particulièrement, ces additifs permettent de contrôler le refroidissement des enrobés pour en améliorer la maniabilité et donc la mise en place.

Il a été constaté, de manière surprenante, que contrairement à l'enseignement de l'art antérieur, il était possible, et même préférable, de fabriquer ces enrobés en une seule étape ; c'est-à-dire qu'il est possible de mélanger directement les différents composants des enrobés dans un seul malaxeur, postes d'enrobage continus et discontinus. Il n'est donc pas nécessaire de fabriquer préalablement un mastic d'asphalte (liant bitumineux et sable, fines et fibres).

Il a en outre été constaté que l'utilisation d'un procédé en une seule phase permet en fait d'augmenter l'homogénéité des enrobés obtenus, et ainsi permet d'augmenter leur qualité. En outre, un procédé en une seule phase est plus économique en termes de coûts.

L'invention a donc également pour objet un procédé de préparation d'enrobés ouverts auto plaçant, pour lequel le mélange des éléments ci-dessous est réalisé dans un même malaxeur en une seule étape :
- des fractions solides minérales :
   ∘ des éléments inférieurs à 0,063 mm (filler ou fines)
   ∘ du sable concassé ou semi-concassé dont les éléments sont compris entre 0,063 mm et 2 ou entre 0,063 mm et 4 mm ;
   ∘ des gravillons, dont les éléments ont des dimensions D supérieures à 14 mm, pouvant de préférence aller jusqu'à 50 mm ;
   ∘ et éventuellement des agrégats d'enrobés
- des fibres minérales et/ou des fibres de synthèse
- du liant bitumineux modifié par adjonction de polymères et de dope d'adhésivité, et le cas échéant d'un additif de maniabilité par fusion
- le cas échéant, des additifs de type chaux et/ou ciment
- le cas échéant un additif de maniabilité à réactivité réglable

Plus particulièrement, le procédé selon l'invention comprend une étape d'ajout du liant bitumineux, avantageusement la totalité du bitume, dans un malaxeur comprenant la totalité des fractions solides minérales, y compris es gravillons, des fibres minérales et/ou des fibres de synthèse et éventuellement des additifs de type chaux et/ou ciment et/ou un additif de maniabilité à réactivité réglable. Le liant bitumineux peut être du bitume pur ou du liant bitumineux modifié par adjonction de polymères et de dope d'adhésivité, et le cas échéant d'un additif de maniabilité par fusion.

Les températures de mélange sont fonctions des procédés d'enrobage utilisés, elles s'échelonnent préférentiellement de 110°C aux températures usuelles de fabrication des enrobés bitumineux définies dans la norme NF EN 12697-35, maximum 180°C.

En laboratoire la durée de fabrication du mélange est de 90 secondes, elle est comprise entre 30 et 60 secondes en configuration industrielle.

Les quantités en chacun des éléments sont telles que décrites précédemment.

Suivant l'invention, l'enrobé ouvert auto plaçant est fabriqué en une seule phase, quel que soit l'outil de production (c'est-à-dire dans tout type de poste d'enrobage). Les cadences sont beaucoup plus importantes et l'homogénéité du produit est améliorée. En particulier, les enrobés selon l'invention peuvent être mis en oeuvre à grande cadence, sans risque de fluage.

Les enrobés ouverts auto plaçant selon l'invention présentent des résistances aux chocs améliorées. Cette amélioration ressort notamment des essais cantabro (essais d'usure) (NF EN 12697-17) où pour une éprouvette de 8kg, avec un pourcentage de vides de 30% (plus ou moins 1%) on obtient avantageusement :
- un pourcentage de perte de masse, dans l'air à 20°C, inférieur à 50%, avantageusement à 30%
- un pourcentage de perte de masse, dans l'eau à 20°C, inférieur à 80%, avantageusement à 60%.

Les enrobés ouverts auto plaçant selon l'invention peuvent être placés sur des surfaces planes ou en pente, y compris sur des pentes raides puisque des applications sur des pentes 4/4 sont possibles.

Les enrobés selon l'invention peuvent être utilisés pour la fabrication de bassins, notamment de bassins de rétention, de berges (canal, rivières, ...), de plafond de canal, de structure de voies ferroviaires, de couverture de remblai, d'accottements, de chaussées (route), de digues ou chemin de halage, des parkings extérieurs paysagers, de revêtement décoratifs.

De par leur structure ouverte, les enrobés selon l'invention permettront une colonisation du revêtement par le milieu naturel : herbe, algues, plantes, ...
Les exemples qui suivent sont illustratifs de l'invention sans la limiter.

### Exemple 1 : Fabrication en une seule étape

Le premier exemple démontre la faisabilité d'une fabrication en une étape et le très bon comportement au fluage obtenu avec un sable semi-concassé.

La composition retenue était la suivante

| | |
|---|---|
| 20/40 calcaire | 80% |
| sable 0/4 semi-concassé | 11,5% |
| Filler calcaire | 5% |
| Fibres | 0,1% |
| 50/70 TOTAL + 3% SBS 1205 | 3,4% |

Le 20/40 calcaire, le sable, le filler et les fibres sont mélangés pendant environ 30 secondes dans le malaxeur. Puis on ajoute le bitume polymère et l'ensemble des constituants est malaxé pendant environ 90 secondes. L'enrobé est ensuite coulé dans un moule 600*400 mm et 12 cm d'épaisseur, incliné de 45°.

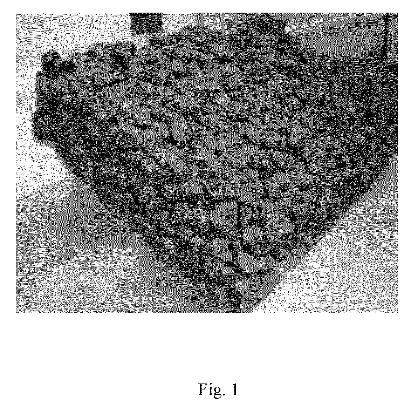

Les tests ont révélé un enrobé ouvert autoplaçant de très bonne qualité avec une mise en oeuvre aisée et une tenue mécanique sur une pente 4/4 très satisfaisante. Fluage à 90 jours <1mm. La photographie en figure 1 illustre l'essai réalisé.

### Exemple 2 : Propriétés mécaniques des enrobés selon l'invention

Le second exemple selon l'invention révèle l'apport des bitumes modifiés et dopés en termes de résistance mécanique et de sensibilité à l'eau.

La composition est la suivante :

| | |
|---|---|
| 20/40 calcaire | 80% |
| sable 0/4 semi-concassé | 11.5% |
| Filler calcaire | 5% |
| Fibres | 0.1% |
| Bitume modifié et dopé | 3.4% |

Les enrobés sont préparés par le même procédé en une seule étape décrit dans l'exemple 1. Les résultats révèlent de bonnes propriétés en termes de résistance mécanique et de sensibilité à l'eau.

### Exemple 3 : Propriétés mécaniques des enrobés selon l'invention

On a réalisé selon un procédé en deux étapes, comprenant la fabrication d'un mastic puis le mélange de ce mastic aux gravillons, à la fabrication d'un enrobé dénommé « enrobé antérieur » et selon un procédé en une étape, tel que décrit dans l'exemple 1, c'est-à-dire sans fabrication préalable d'un mastic, à la fabrication d'enrobés dénommés « A », « B » et « C ».

Les formulations et les propriétés mécaniques des enrobés sont données dans le tableau 1 suivant :

**Tableau 1 : formulations et propriétés mécaniques des enrobés**

| | Formules | Selon l'invention | | |
|---|---|---|---|---|
| Matériaux / Essais | Enrobé antérieur | A | B | C |
| 20/40 (%) | 83 | 83 | 83 | 83 |
| 0/4 concassé () | | 11,9 | 11,9 | 11,9 |
| 0/4 roulé (%) | 11,9 | | | |
| Filler calcaire (%) | 5 | 5 | 5 | 5 |
| Fibres | 0,1 | 0,1 | 0,1 | 0,1 |
| Bitume pur (ppc) | 3,4 | | | |
| Liant modifié (ppc) | | 4,3 | 3,7 | 3,4 |
| Dope (% / bitume) | | 0,3 | 0,3 | 0,3 |
| Tenue à l'eau NF EN 12697-12 | | | | |
| I/C (%) | 99,0 | 99,5 | 94,1 | 84,6 |
| % vides éprouvettes | 33,1 | 32,2 | 32,7 | 32,5 |
| Cantabres NF EN 12697-17 (*) | | | | |
| % perte de masse air 20°C | 67,2 | 14,3 | 17,6 | 27,5 |
| % perte de masse eau 20°C | 100 | 18,9 | 23,6 | 54,4 |
| % vides éprouvettes | 30,0 | 30,1 | 29,2 | 29,8 |

| | | | | |
|---|---|---|---|---|
| (*) essai sur éprouvette de 8kg | | | | |

Les essais cantabriques stimulant la résistance au choc, paramètre important pour les applications requises, révèlent bien des résistances nettement supérieures pour les enrobés ouverts réalisés suivant l'invention.

### Abrégé :

L'invention a pour objet des enrobés ouverts auto plaçant constitués de fractions solides minérales (éléments inférieurs à 0,063 mm, sable et gravillons) enrobées à l'aide d'un liant bitumineux comprenant des fibres minérales et/ou des fibres de synthèse, caractérisés en ce que le liant bitumineux est modifié par adjonction de polymères et de dopes d'adhésivité, en ce que le sable dans les fractions solides minérales est essentiellement du sable concassé et/ou semi-concassé, et en ce que les enrobés sont obtenus par un procédé de fabrication qui consiste à mélanger tous les éléments dans un même malaxeur en une seule étape, et en ce que les fractions solides minérales comprennent des granulats minéraux naturels présentant la répartition suivante :
- des éléments inférieurs à 0,063 mm ;
- du sable concassé ou semi-concassé dont les éléments sont compris entre 0,063 mm et 2 ou entre 0,063 mm et 4 mm ;
- des gravillons, dont les éléments ont des dimensions D supérieures à 14 mm, pouvant de préférence aller jusqu'à 50 mm ;
et éventuellement des agrégats d'enrobés.

L'invention a également pour objet un procédé de préparation, en une seule étape dans tout type de poste d'enrobage, de tels enrobés et leur utilisation pour la fabrication de bassins, notamment de bassins de rétention, de berges (canal, rivières, ...), de plafond de canal, de structures de voies ferroviaires, de couverture de remblai, d'accotements, de chaussées (route), de digues ou chemin de halage, des parkings extérieurs paysagers, de revêtement décoratifs.

## Revendications

1. Enrobés ouverts auto plaçant constitués de fractions solides minérales comprenant des éléments inférieurs à 0,063 mm, du sable et des gravillons, lesdites fractions solides minérales sont enrobées à l'aide d'un liant bitumineux comprenant des fibres minérales et/ou des fibres de synthèse, **caractérisés en ce que** le liant bitumineux est modifié par adjonction de polymères et de dopes d'adhésivité, **en ce que** le sable, dans les fractions solides minérales, est pour au moins 90% en poids, par rapport au poids total du sable, du sable concassé et/ou semi-concassé, **en ce que** les enrobés ont une teneur en vides comprise entre 25 et 40%, **en ce que** les enrobés sont obtenus par un procédé de fabrication qui consiste à mélanger tous les éléments dans un même malaxeur en une seule étape et **en ce que** les fractions solides minérales comprennent des granulats minéraux naturels présentant la répartition suivante :
- des éléments inférieurs à 0,063 mm
- du sable concassé ou semi-concassé dont les éléments sont compris entre 0,063 mm et 2 ou entre 0,063 mm et 4 mm ;
- des gravillons, dont les éléments ont des dimensions D supérieures à 14 mm, pouvant de préférence aller jusqu'à 50 mm ;
et éventuellement des agrégats d'enrobés.

2. Enrobés ouverts selon la revendication 1, **caractérisés en ce que** la taille des fibres est avantageusement supérieure à 1/20 de D, plus avantageusement leur taille varie de 1/10 de D à D.

3. Enrobés ouverts selon l'une quelconque des revendications précédentes, **caractérisés en ce que** la teneur en fibres dans les enrobés ouverts auto plaçant varie de 0,1 à 1% en poids, avantageusement de 0,2 à 0,6% en poids, par rapport au poids total des enrobés ouverts auto plaçant.

4. Enrobés ouverts selon l'une quelconque des revendications précédentes, **caractérisés en ce que** la teneur en polymère dans le liant bitumineux varie de 1 à 20 % en poids, avantageusement de 1 à 5 % en poids, par rapport au poids total du liant bitumineux.

5. Enrobés ouverts selon l'une quelconque des revendications précédentes, **caractérisés en ce que** le liant bitumineux comprend un dope d'adhésivité en une teneur comprise entre 0,2 et 0,5% en poids, par rapport au poids total du liant bitumineux.

6. Enrobés ouverts selon l'une quelconque des revendications précédentes, **caractérisés en ce que** le liant bitumineux a une pénétrabilité, mesurée selon la norme NF EN 1426 qui varie entre 10 à 150 dixièmes de millimètres, avantageusement entre 30 et 70, plus avantageusement entre 30 et 50.

7. Enrobés ouverts selon l'une quelconque des revendications précédentes, **caractérisés en ce que** la teneur totale en liant bitumineux est de 2 à 10% en poids, avantageusement 3 à 6% en poids, par rapport au poids total des fractions solides minérales.

8. Enrobés ouverts selon l'une quelconque des revendications précédentes, **caractérisés en ce qu'**ils comprennent un additif de maniabilité, avantageusement choisi parmi un additif de maniabilité par fusion, un additif de maniabilité à réactivité réglable et leurs mélanges.

9. Enrobés selon la revendication 8, **caractérisés en ce que** l'additif de maniabilité par fusion a un point de fusion ou une zone de ramollissement dans une gamme de températures allant de 60°C à 150°C, avantageusement de 80°C à 120°C.

10. Enrobés selon la revendication 8 ou 9, **caractérisés en ce que** l'additif de maniabilité par fusion est ajouté au liant bitumineux, avantageusement en une teneur comprise entre 3 et 20% en poids, plus avantageusement entre 4 et 8% en poids, par rapport au poids total du liant bitumineux.

11. Enrobés selon l'une quelconques des revendications 8 à 10, **caractérisés en ce que** l'additif de maniabilité par fusion est choisi dans le groupe constitué par un triglycéride d'acides gras, avantageusement l'acide 12-hydroxy-octadécanoïque et/ou une huile de ricin hydrogénée, une cire d'origine animale, végétale ou d'hydrocarbure, en particulier des cires hydrocarbonées à chaîne longue (plus de 30 atomes de carbone), et leurs mélanges.

12. Enrobés selon la revendication 8, **caractérisés en ce que** l'additif de maniabilité à réactivité réglable est ajouté dans le malaxeur, avantageusement en une teneur comprise entre 1 et 10 kg par tonne d'enrobés.

13. Procédé de préparation des enrobés ouverts auto plaçant selon l'une quelconque des revendications précédentes, pour lequel le mélange des éléments ci-dessous est réalisé dans un même malaxeur en une seule étape :
- des fractions solides minérales comprennent des granulats minéraux naturels présentant la répartition suivante :
∘ des éléments inférieurs à 0,063 mm
∘ du sable concassé ou semi-concassé dont les éléments sont compris entre 0,063 mm et 2 ou entre 0,063 mm et 4 mm ;
∘ des gravillons, dont les éléments ont des dimensions D supérieures à 14 mm, pouvant de préférence aller jusqu'à 50 mm ;
∘ et éventuellement des agrégats d'enrobés
- des fibres minérales ou des fibres de synthèse
- du liant bitumineux modifié par adjonction de polymères et de dope d'adhésivité, et le cas échéant d'un additif de maniabilité par fusion
- le cas échéant, des additifs de type chaux et/ou ciment.
- le cas échéant un additif de maniabilité à réactivité réglable

14. Utilisation des enrobés ouverts auto plaçant selon l'une quelconque des revendications précédentes, pour la fabrication de bassins, notamment de bassins de rétention, de berges, de plafond de canal, de structures de voies ferroviaires, de couverture de remblai, d'accotements, de chaussées (route), de digues ou chemin de halage, des parkings extérieurs paysagers, de revêtement décoratifs.

## Patentansprüche

1. Selbstkompaktierendes hohlraumarmes Mischgut, gebildet aus festen mineralischen Fraktionen, umfassend Elemente unter 0,063 mm, Sand und Splitt, wobei die festen mineralischen Fraktionen mit Hilfe eines bitumenhaltigen Bindemittels umhüllt sind, das mineralische Fasern und/oder synthetische Fasern umfasst, **dadurch gekennzeichnet, dass** das bitumenhaltige Bindemittel durch Hinzufügen von Polymeren und von Haftmitteln modifiziert ist, dass der Sand in den festen mineralischen Fraktionen mindestens 90 Gew.-% in Bezug zum Gesamtgewicht des Sands, des zerkleinerten und/oder halbzerkleinerten Sands beträgt, dass das Mischgut einen Hohlraumanteil zwischen 25 und 40 % hat, dass das Mischgut mittels eines Verfahrens hergestellt wird, das darin besteht, alle Elemente in demselben Mischer in einem einzigen Schritt zu mischen und dass die festen mineralischen Fraktionen natürliche Gersteinskörnungen umfassen, die die folgende Unterteilung aufweisen:
- Elemente unter 0,063 mm,
- zerkleinerten und/oder halbzerkleinerten Sand, dessen Elemente zwischen 0,063 mm und 2 mm oder zwischen 0,063 mm und 4 mm inklusive sind,
- Splitt, dessen Elemente Abmessungen D über 14 mm, vorzugsweise bis 50 mm, haben,
und eventuell Mischgut-Zuschlagstoffe.

2. Hohlraumarmes Mischgut nach Anspruch 1, **dadurch gekennzeichnet, dass** die Größe der Fasern in vorteilhafter Weise über 1/20 von D ist, wobei ihre Größe in noch vorteilhafterer Weise von 1/10 von D bis D schwankt.

3. Hohlraumarmes Mischgut nach einem der vorangehenden Ansprüche, **dadurch gekennzeichnet, dass** der Faseranteil in dem selbstkompaktierenden hohlraumarmen Mischgut von 0,1 bis 1 Gew.-%, in vorteilhafter Weise von 0,2 bis 0,6 Gew.-%, in Bezug zum Gesamtgewicht des selbstkompaktierenden hohlraumarmen Mischguts schwankt.

4. Hohlraumarmes Mischgut nach einem der vorangehenden Ansprüche, **dadurch gekennzeichnet, dass** der Polymeranteil in dem bitumenhaltigen Bindemittel von 1 bis 20 Gew.-%, in vorteilhafter Weise von 1 bis 5 Gew.-%, in Bezug zum Gesamtgewicht des bitumenhaltigen Bindemittels schwankt.

5. Hohlraumarmes Mischgut nach einem der vorangehenden Ansprüche, **dadurch gekennzeichnet, dass** das bitumenhaltige Bindemittel ein Haftmittel in einem Anteil zwischen 0,2 und 0,5 Gew.-% inklusive in Bezug zum Gesamtgewicht des bitumenhaltigen Bindemittels umfasst.

6. Hohlraumarmes Mischgut nach einem der vorangehenden Ansprüche, **dadurch gekennzeichnet, dass** das bitumenhaltige Bindemittel eine Durchlässigkeit, gemessen gemäß der Norm NF EN 1426, hat, die zwischen 10 bis 150 Zehntel Millimeter, in vorteilhafter Weise zwischen 30 und 70, in noch vorteilhafterer Weise zwischen 30 und 50, schwankt.

7. Hohlraumarmes Mischgut nach einem der vorangehenden Ansprüche, **dadurch gekennzeichnet, dass** der Gesamtanteil an bitumenhaltigem Bindemittel von 2 bis 10 Gew.-%, in vorteilhafter Weise 3 bis 6 Gew.-%, in Bezug zum Gesamtgewicht der festen mineralischen Fraktionen beträgt.

8. Hohlraumarmes Mischgut nach einem der vorangehenden Ansprüche, **dadurch gekennzeichnet, dass** es einen Verarbeitbarkeitzusatzstoff umfasst, der in vorteilhafter Weise aus einem Verarbeitbarkeitzusatzstoff durch Schmelzen, einem Verarbeitbarkeitzusatzstoff mit regulierbarer Reaktivität und deren Gemischen ausgewählt ist.

9. Mischgut nach Anspruch 8, **dadurch gekennzeichnet, dass** der Verarbeitbarkeitzusatzstoff durch Schmelzen einen Schmelzpunkt oder eine Erweichungszone in einem Temperaturbereich von 60 °C bis 150 °C, in vorteilhafter Weise von 80 °C bis 120 °C, hat.

10. Mischgut nach Anspruch 8 oder 9, **dadurch gekennzeichnet, dass** der Verarbeitbarkeitzusatzstoff durch Schmelzen dem bitumenhaltigen Bindemittel in vorteilhafter Weise in einem Anteil zwischen 3 und 20 Gew.-%, in noch vorteilhafterer Weise zwischen 4 und 8 Gew.-%, inklusive in Bezug zum Gesamtgewicht des bitumenhaltigen Bindemittels hinzugefügt wird.

11. Mischgut nach einem der Ansprüche 8 bis 10, **dadurch gekennzeichnet, dass** der Verarbeitbarkeitzusatzstoff durch Schmelzen aus der Gruppe ausgewählt ist, die von einem Fettsäure-Triglycerid, in vorteilhafter Weise von der 12-Hydroxyoctadecansäure und/oder einem hydrierten Rizinusöl, einem Wachs tierischen, pflanzlichen oder Kohlenwasserstoff-Ursprungs, insbesondere den langkettigen Kohlenwasserstoffwachsen (über 30 Kohlenstoffatome) und deren Gemischen, gebildet ist.

12. Mischgut nach Anspruch 8, **dadurch gekennzeichnet, dass** der Verarbeitbarkeitzusatzstoff mit regulierbarer Reaktivität in dem Mischer in vorteilhafter Weise in einem Anteil zwischen 1 und 10 kg inklusive je Tonne Mischgut hinzugefügt wird.

13. Verfahren für die Herstellung von selbstkompaktierendes hohlraumarmem Mischgut nach einem der vorangehenden Ansprüche, wobei das Mischen der nachfolgenden Elemente in demselben Mischer in einem einzigen Schritt durchgeführt wird:
- der festen mineralischen Fraktionen, die natürliche mineralische Granulate umfassen, die die folgende Unterteilung aufweisen:
∘ Elemente unter 0,063 mm,
∘ zerkleinerten und/oder halbzerkleinerten Sand, dessen Elemente zwischen 0,063 mm und 2 mm oder zwischen 0,063 mm und 4 mm inklusive sind,
∘ Splitt, dessen Elemente Abmessungen D über 14 mm, vorzugsweise bis 50 mm, haben,
∘ und eventuell Mischgut-Zuschlagstoffe,
- mineralische Fasern oder synthetische Fasern,
- bitumenhaltiges Bindemittel, modifiziert durch Hinzufügen von Polymeren und von Haftmittel, und gegebenenfalls eines Verarbeitbarkeitzusatzstoffs durch Schmelzen,
- gegebenenfalls Zusatzstoffe vom Typ Kalk und/oder Zement,
- gegebenenfalls ein Verarbeitbarkeitzusatzstoff mit regulierbarer Reaktivität.

14. Verwendung des selbstkompaktierenden hohlraumarmen Mischguts nach einem der vorangehenden Ansprüche für die Herstellung von Becken, vor allem von Rückhaltebecken, Uferböschungen, Kanalböden, Gleiswegstrukturen, Packlagenabdeckungen, Randstreifen, Fahrwegen (Straße), Deichen oder Warpenwegen, Außenparkplatzanlagen und Dekorationsüberzügen.

## Claims

1. Open-graded self-compacting asphalt mix consisting of solid mineral fractions, comprising elements smaller than 0.063 mm, sand and chippings, said solid mineral fractions are coated with a bituminous binder containing mineral fibres and/or synthetic fibres, **characterised in that** the bituminous binder is modified by addition of polymers and adhesion agent, **in that** the sand, in the solid mineral fractions, is for at least 90% by weight relative to the total weight of the sand, crushed and/or semi-crushed sand, and **in that** the asphalt has a void content comprised between 25 and 40% and **in that** the asphalt is obtained by a production method that consists of mixing all the elements in a same mixer in a single step and **in that** the solid mineral fractions comprise natural mineral aggregates with the following distribution:
- elements smaller than 0.063 mm
- crushed or semi-crushed sand whose elements are comprised between 0.063 mm and 2 mm or between 0.063 mm and 4 mm;
- chippings, whose elements have dimensions D greater than 14 mm, and preferably ranging up to 50 mm;
and if necessary reclaimed asphalt mix.

2. Open-graded asphalt mix according to claim 1, **characterised in that** the size of the fibres is advantageously greater than 1/20 D, more advantageously their size varies from 1/10 D to D.

3. Open-graded asphalt mix according to any one of the preceding claims, **characterised in that** the fibre content in the open-graded self-compacting asphalt mix varies from 0.1 to 1% by weight, advantageously from 0.2 to 0.6% by weight, compared to the total weight of the open-graded self-compacting asphalt mix.

4. Open-graded asphalt mix according to any one of the preceding claims, **characterised in that** the polymer content in the bituminous binder varies from 1 to 20% by weight, advantageously from 1 to 5% by weight, compared to the total weight of the bituminous binder.

5. Open-graded asphalt mix according to any one of the preceding claims, **characterised in that** the bituminous binder comprises an adhesion agent in a content comprised between 0.2 and 0.5% by weight, compared to the total weight of the bituminous binder.

6. Open-graded asphalt mix according to any one of the preceding claims, **characterised in that** the bituminous binder has a penetrability, measured according to standard NF EN 1426 ranging from 10 to 150 tenths of a millimetre, advantageously between 30 and 70, more advantageously between 30 and 50.

7. Open-graded asphalt mix according to any one of the preceding claims, **characterised in that** the total content of bituminous binder is 2 to 10% by weight, advantageously 3 to 6% by weight, compared to the total weight of the solid mineral fractions.

8. Open-graded asphalt mix according to any one of the preceding claims, **characterised in that** it comprises a workability additive, advantageously chosen from among a melting workability additive, an adjustable reactivity workability additive and mixtures thereof.

9. Asphalt mix according to claim 8, **characterised in that** the melting workability additive has a melting point or softening zone in a temperature range from 60°C to 150°C, advantageously from 80°C to 120°C.

10. Asphalt mix according to claim 8 or 9, **characterised in that** the melting workability additive is added to the bituminous binder, advantageously in a content between 3 and 20% by weight, more advantageously between 4 and 8% by weight, compared to the total weight of the bituminous binder.

11. Asphalt mix according to any one of claims 8 to 10, **characterised in that** the melting workability additive is chosen from the group including a fatty acid triglyceride, advantageously 12-hydroxyoctadecanoic acid and/or a hydrogenated castor oil, an animal, vegetable or hydrocarbon wax, in particular long-chain hydrocarbon waxes (more than 30 carbon atoms) and mixtures thereof.

12. Asphalt mix according to claim 8, **characterised in that** the adjustable reactivity workability additive is added into the mixer, advantageously in a content comprised between 1 and 10 kg per ton of asphalt mix.

13. Preparation method for open-graded self-compacting asphalt mix according to any one of the preceding claims, for which the elements below are mixed in a same mixer and in a single step:
- solid mineral fractions comprising natural mineral aggregates with the following distribution:
∘ elements smaller than 0.063 mm
∘ crushed or semi-crushed sand whose elements are comprised between 0.063 mm and 2 mm or between 0.063 mm and 4 mm;
∘ chippings, whose elements have dimensions D greater than 14 mm, and preferably ranging up to 50 mm;
∘ and if necessary reclaimed asphalt mix
- mineral fibres or synthetic fibres
- bituminous binder modified by addition of polymers and adhesion agent, and, if necessary, a melting workability additive
- if necessary, lime and/or cement additives
- if necessary, an adjustable reactivity workability additive.

14. Use of the open-graded self-compacting asphalt mix according to any one of the preceding claims for the production of basins, in particular holding ponds, banks, canal roofs, railway structures, embankment coverings, shoulders, pavements (road), dykes or towpaths, landscaped outdoor parking, or decorative coatings.
